# EUROPÄISCHE PATENTSCHRIFT

(11) **EP 2 473 759 B1**
(45) Veröffentlichungstag und Bekanntmachung des Hinweises auf die Patenterteilung: **02.12.2015**
(21) Anmeldenummer: 10795606.2
(22) Anmeldetag: 27.08.2010
(51) Int. Cl.: F16H 1/28, F16H 3/72

(54) **UNTERSETZUNGSGETRIEBE**
REDUCTION GEAR
ENGRENAGE RÉDUCTEUR

(30) Priorität: 02.09.2009 DE 102009039686
(43) Veröffentlichungstag der Anmeldung: 11.07.2012
(73) Patentinhaber: Faller, Alexander M., 84056 Rottenburg (DE)
(72) Erfinder: Faller, Alexander M., 84056 Rottenburg (DE)
(74) Vertreter: Ganahl, Bernhard
(86) Internationale Anmeldenummer: PCT/DE2010/000998
(87) Internationale Veröffentlichungsnummer: WO 2011/026463

(56) Entgegenhaltungen:
- DE-A1- 2 504 867
- DE-A1- 4 214 635
- DE-A1- 10 159 095
- DE-A1- 19 509 577
- US-B1- 6 715 291

## Beschreibung

### Gegenstand der Erfindung

Die Erfindung bezieht sich auf ein Unter- und Übersetzungsgetriebe, welches sowohl insbesondere extreme Untersetzungen (wie z.B. beim Antrieb von Planetarien, von Handarbeitsgeräten Handbohrmaschinen, elektrische oder pneumatische Schrauber etc., Luftschraubengetriebe für Flugzeuge) ermöglicht und ebenso in umgekehrter Richtung mangels Selbsthemmung extreme Übersetzungen (wie z.B. bei Windkraftanlagen zur Erzeugung der notwendigen Generatordrehzahl oder beim Antrieb der Förderschnecken in sog. Dekantem zum Trennen von Emulsionen).

### Stand der Technik

Aus der gattungsgemäßen DE 25 04 867 A1 geht ein Antriebsaggregat hervor. Dieses Antriebsaggregat umfasst ein mehrstufiges Planetengetriebe. Gemäß diesem Getriebe sind zwei Planetenradsätze auf gemeinsamen Wellen angeordnet, die auf zwei verschieden Hohlräder einwirken.

Zum Erreichen extremer Untersetzungen werden derzeit entweder mehrstufige Zahnrad-, Schnecken oder Planetengetriebe verwendet, bei Platzmangel, hohen Präzisionsanforderungen oder geringen Drehmomenten kommen auch Getriebe mit exzentrischen oder unrunden oder exzentrisch gelagerten Bewegungskörpem wie z.B. unter den Markennamen "Cyclo" Getriebe oder" Harmonic drive" bekannt, zum Einsatz.

### Kritik am Stand der Technik

Abgesehen von der zum Teil sehr aufwändigen Fertigung steigt mit dem Übersetzungsverhältnis zwangsläufig auch die Anzahl der Zähne (Harmonie drive) oder der Übertragungselemente (Cyclo). Damit wird deren Baugröße immer kleiner und das übertragbare Drehmoment sinkt. Ein weiterer Nachteil ist, dass z.B. beim "Harmonie drive" Getriebe systembedingt die Drehrichtung davon abhängig ist, welches Bauteil feststehend ist, beim "Cyclo" Getriebe ist die Abtriebsdrehrichtung immer entgegengesetzt zur Antriebsdrehrichtung.

### Aufgabenstellung

Es ist die Aufgabe der Erfindung, ein Unter- und Übersetzungsgetriebe zu schaffen das durch Verwendung einfach herstellbarer (Norm-)Teile einfach und kostengünstig herstellbar ist. Weiter soll das Getriebe Über- und Untersetzungen ermöglichen, deren i nahe 0, nahe 1 oder wesentlich größer als 1 (z.B. 500 und höher) liegt und sowohl positiv wie auch negativ sein kann. Ferner sollen der An- und Abtrieb beliebig am Getriebe wirken können und die Möglichkeit der Überlagerung durch einen Nebenantrieb soll möglich sein.

### Lösung

Erfindungsgemäß wird die Aufgabe dadurch gelöst, dass das Unter- bzw. Übersetzungsgetriebe aus einem Planetengetriebe besteht, welches ein Sonnenrad mit einer ersten und einer zweiten mechanisch gekoppelten Verzahnung sowie einen ersten und einen zweiten Planetenträger mit einem entsprechenden ersten und zweiten Planetenradsatz umfasst, wobei der erste Planetenradsatz und der zweite Planetenradsatz eine Verzahnung aufweisen dadurch ein gekennzeichnet, dass das Planetengetriebe Hohlrad mit einer ersten und einer zweiten mechanisch gekoppelten Verzahnung umfasst, wobei die erste und die zweite mechanisch gekoppelte Verzahnung des Sonnerades entsprechend mit der Verzahnung des ersten und des zweiten Planetenradsatzes in Eingriff stehen und die Verzahnungen des ersten und des zweiten Planetenradsatzes entsprechend mit den ersten und zweiten Verzahnungen des Hohlrades in Eingriff stehen, wobei die ersten und die zweiten Verzahnungen des Hohlrades und/oder des Sonnenrades unterschiedlich Wirkreisdurchmesser aufweisen.

Es auch möglich, dass die Seite (a) des Hohlrades (2) (oder evtl. des Sonnenrades (1)) mit der Seite (b) über weitere Zahnräder (5) z.B. Kegelzahnräder verbunden sind.

Sowohl der Antrieb wie auch der Abtrieb kann über jedes der Elemente Sonnenrad (1), Hohlrad (2), Planetenträger(4a) mit Planetenrädern (3a) oder Planetenträger(4b) mit Planetenrädern (3b) erfolgen. Weiter ist es erforderlich dass je nach gewünschter Funktion des Getriebes eines der Elemente (Sonnenrad (1), Hohlrad (2), Planetenträger(4a) mit Planetenrädern (3a) oder Planetenträger(4b) mit Planetenrädern (3b)) zwischen Antrieb und Abtrieb festgehalten (gebremst, arretiert oder als Nebenantrieb separat angetrieben) wird.

Die Wirkungsweise wird anhand der folgenden Beschreibung des Prinzips erklärt:
Erfolgt z.B. der Antrieb (8) bei einem festgehaltenem Planetenträger (4a) über das Sonnenrad (1) mit positiver Drehrichtung, so dreht sich das Hohlrad (2) mit negativer Drehrichtung im Verhältnis i=i₁₂. Der Planetenträger (4b) des zweiten Planetenradsatzes (3b) bleibt bei i₁₂₍ₐ₎ gleich i_{12(b)} stehen. Ändert man jedoch das Verhältnis i₁₂₍ₐ₎ gegenüber i_{12(b)} geringfügig, so dreht sich der Planetenträger des zweiten Planetenradsatzes im Verhältnis i₁₂₍ₐ₎ / i_{12(b)} bzw. im Verhältnis 1 - ra/rb in positiver oder negativer Richtung, je nachdem, ob i_{12(b)} (rb) größer oder kleiner als i₁₂₍ₐ₎ (ra) ist. Die Änderung des Verhältnis i₁₂₍ₐ₎ /i_{12(b)} kann entweder durch Änderung der Zähnezahl am Hohlrad, am Sonnenrad, oder sowohl am Hohl- wie auch am Sonnenrad (bei entsprechender evtl. erforderlicher Änderung von Modul und Planetenrädern) erfolgen. Bei dieser Anordnung dient beispielsweise der Planetenträger (4a) als "Stütz- bzw. Übertragungselement".

Als weiterer Vorteil bietet sich die Möglichkeit das "Übertragungselement" beim Einschalten frei mitlaufen zu lassen und erst allmählich abzubremsen, dadurch kann das Getriebe gleichzeitig als Kupplung dienen. Auch kann dieses Übertragungselement mit einer definierten Bremskraft festgehalten werden und so als Überlastschutz dienen.

Aus dieser prinzipiellen Anordnung sind unterschiedliche Konfigurationen bzw. Varianten ableitbar, die nachfolgend in tabellarischer Form beschrieben werden. Dabei bedeuten abweichend von der Nummerierung in der Bezeichnungsliste:
1 = Sonnenrad
2 = Hohlrad
3 = Planetenträger mit Planetenradsatz auf der Seite (a)
4 = Planetenträger mit Planetenradsatz auf der Seite (b)

Die Zahlenfolge in der Tabelle
- Antrieb: 1
- fest: 2
- frei: 3
- Abtrieb: 4
bedeutet dann also, dass der Antrieb über das Sonnenrad (1) erfolgt, das Hohlrad (2) festgehalten (gebremst bzw. arretiert oder durch einen Nebenantrieb angetrieben) wird, der Planetenträger mit Planetenradsatz auf der Seite (a) frei beweglich ist (bzw. ein zweiter Abtrieb über das Element mit der Bezeichnung "frei" erfolgt) und der Abtrieb über den Planetenträger mit Planetenradsatz auf der Seite (b) erfolgt. Diese Zuordnung gilt analog für auch für alle anderen Möglichkeiten.

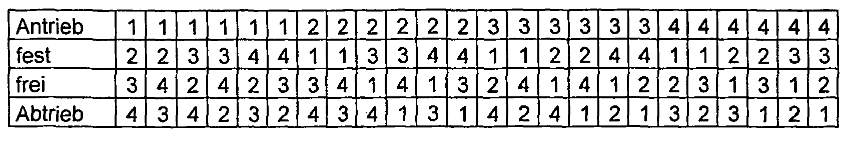

Bei allen Konfigurationen kann das Hohlrad wie vor beschrieben auch mittels Zahnrädern mechanisch gekoppelt werden.

Bei allen Konfigurationen mit einem Nebenantrieb kann auch die Funktion des Haupt- und Nebenantriebs vertauscht werden.

Eine mechanische Koppelung kann auch dadurch erfolgen, dass eine Verzahnungsseite des Hohlrades (2a) oder (2b) bzw. Seite (2aa) oder (2bb) mittels einer festen Verbindung zum Gehäuse oder einer vorzugsweise mit dem Gehäuse verbundenen Bremse (Kupplung) (7c) ganz oder teilweise arretiert wird, während die andere Verzahnungsseite des Hohlrades (2b) oder (2a) bzw. Seite (2bb) oder (2aa) durch einen weiteren Antrieb (8b) z.B. mittels einer Schnecke, eines Kegelrades, einer Kette etc. mit fester oder variabler Drehzahl angetrieben bzw. ebenfalls arretiert wird und so eine Drehzahlveränderung einer Abtriebsseite erfolgen kann. Es ist auch möglich, beide Seiten des Hohlrades separat anzutreiben.

Prinzipiell ist fast jede Unter- oder Übersetzung realisierbar. Der große Vorteil dieses Getriebes liegt jedoch in der Möglichkeit, dass je nach Konfiguration und Zähnezahldifferenz die Gesamtübersetzung positiv oder negativ sehr nahe bei 0, sehr nahe bei 1 oder sehr nahe bei 1/0,0..0x liegen kann, wobei der letzte Term symbolisch für sehr hohe Übersetzungen steht.

Wird z.B. der Planetenträger 3 (4a) festgehalten, so wird erfolgt eine Untersetzung im Verhältnis 1 - i₁₂₍ₐ₎/i_{12(b)} bzw. 1-ra/rb (Nahe 0 bei geringen Wirkdurchmesserdifferenzen)

Wird das Hohlrad 2 (2) festgehalten, so wird erfolgt eine Untersetzung im Verhältnis i₁₂₍ₐ₎ /i_{12(b)} bzw. ra/rb. (Nahe 1 bei geringen Wirkdurchmesserdifferenzen)
(ra) ist der Abstand der Planetenradachsen der Planetenräder (3a) von der Drehachse des Sonnenrades (1)
(rb) ist der Abstand der Planetenradachsen der Planetenräder (3b) von der Drehachse des Sonnenrades (1)
(Der Durchmesser des Sonnenrades ginge zwar in die Formeln und die Berechnungen mit ein, der Einfluss des Sonnenraddurchmessers ist jedoch für das Verständnis der Funktionsweise nicht notwendig und deshalb nicht in die Berechnung einbezogen)
Anstatt eines der Elemente festzuhalten, besteht auch die Möglichkeit, dieses separat z.B. mit einem regelbaren Antrieb anzutreiben und so die jeweilige feste Übersetzung entsprechend zu überlagern und damit das Getriebe als Sammelgetriebe einzusetzen. Bei der Konfiguration mit einem Haupt- und Nebenantrieb ist es unerheblich, welcher Antrieb als Hauptantrieb und welcher als Nebenantrieb dient.

Es besteht auch die Möglichkeit, die Festhaltekraft zu begrenzen. Dies kann entweder durch ein nachgiebiges Element erfolgen, welches nach Beendigung der Lastüberschreitung wieder einrastet oder durch ein Lastbegrenzungselement, das bei Überschreitung einer bestimmten Grenzlast zerstört wird und ersetzt werden muss.

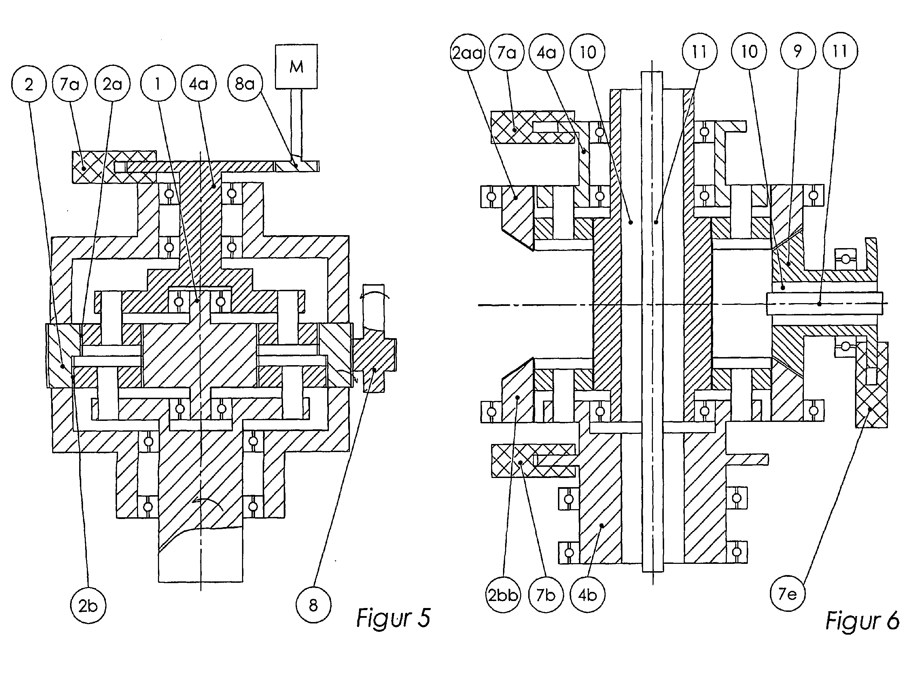

Bedingt durch die Tatsache, dass sich alle Teile konzentrisch um die gleiche Hauptachse bewegen, besteht die Möglichkeit, wie in Fig. 6 dargestellt die Wellen hohl zu gestalten und damit einen Kanal (10) zu erhalten, durch den beliebige Elemente (11) hindurchgeführt werden können. Dies können z.B. längsbewegliche Gestänge zum Verstellen von Rotorblättern bei Windkraftanlagen, rotierende Wellen für weitere Kraftübertragungen oder die Rückführung des Abtriebs auf die Antriebsseite sein. Auch können durch den entstandenen beliebige Leitungen, Kabel, Seile etc. geführt werden.

### Bezeichnungsliste

Nr. 1: Sonnenrad
Nr. 1 a: Sonnenradverzahnung (a)
Nr. 1aa: Sonnenradteil (a)-Seite
Nr. 1b: Sonnenradverzahnung (b)
Nr. 1bb: Sonnenradteil (b)-Seite
Nr. 2: Hohlrad
Nr. 2a: Hohlradverzahnung (a)
Nr. 2aa: Hohlradteil (a)-Seite
Nr. 2b: Hohlradverzahnung (b)
Nr. 2bb: Hohlradteil (b) -Seite
Nr. 3a: Planetenradsatz (a)
Nr. 3b: Planetenradsatz (b)
Nr. 4a: Planetenträger (a)
Nr. 4b: Planetenträger (b)
Nr. 5: Planetenradachsen
Nr. 6: Gehäuse
Nr. 7: Bremse, Arretierung oder Nebenantrieb
Nr. 7a: Bremse, Arretierung oder Nebenantrieb von Planetenträger (a)
Nr. 7b: Bremse, Arretierung oder Nebenantrieb von Planetenträger (b)
Nr. 7c: Bremse, Arretierung oder Nebenantrieb (8a) von Hohlradteil (2bb)
Nr. 7d: Bremse, Arretierung oder Nebenantrieb von Sonnenrad (1)
Nr. 8: Hauptantrieb
Nr. 8a: Nebenantrieb
Nr. 8b: Nebenantrieb von Hohlrad (2)
Nr. 9: Kopplungszahnrad
Nr.10: Kanal oder Bohrung der Hohlwelle
Nr. 11: z.B. längsbewegliche Gestänge, rotierende Wellen, Leitungen, Kabel, Seile etc.
Nr. 12: Windrotor
M: Motor (= Antrieb oder Nebenantrieb)
G: Generator (= Abtrieb)

### Figurenbeschreibung

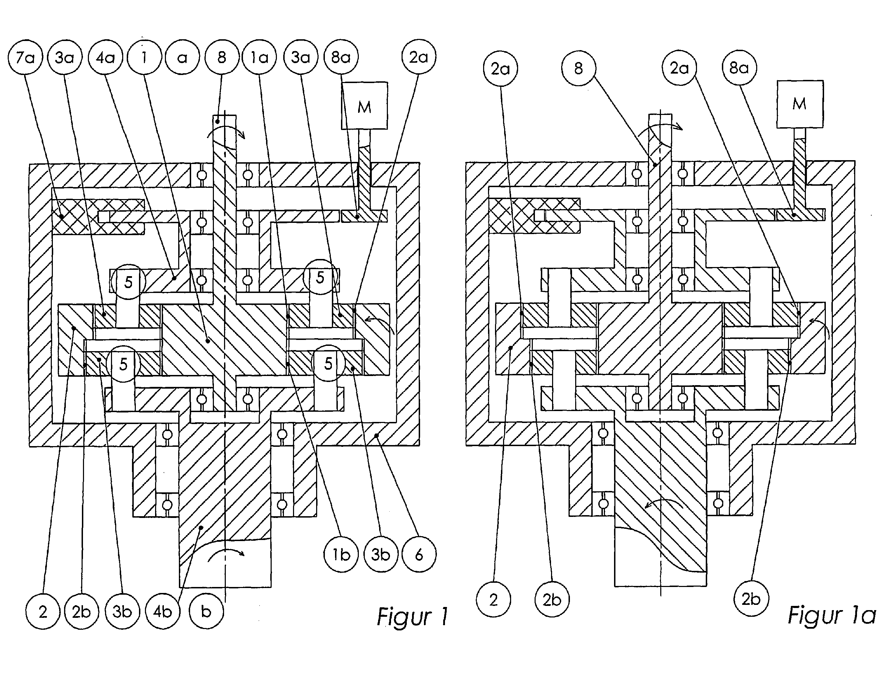

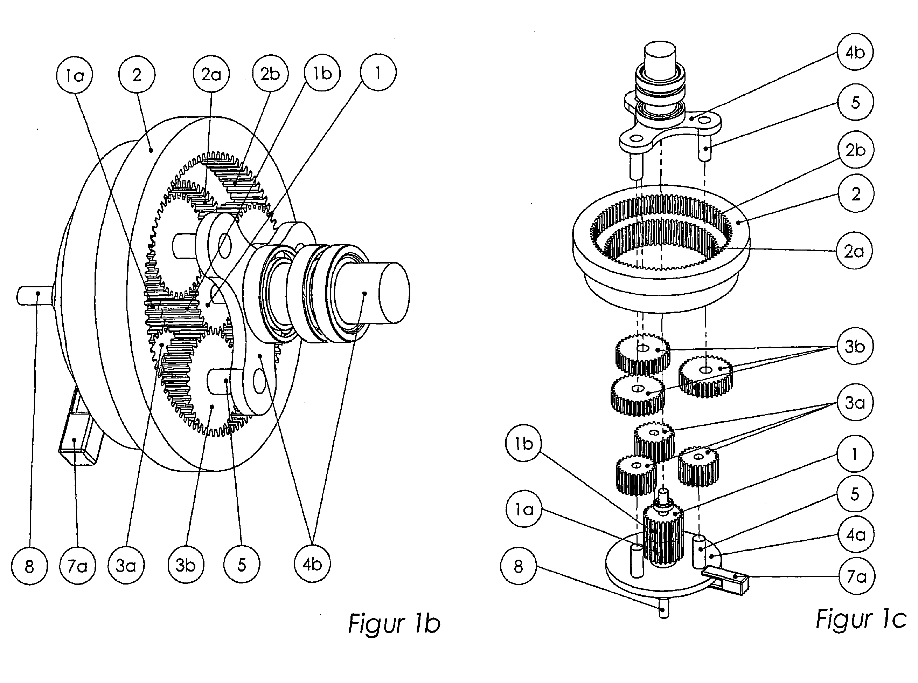

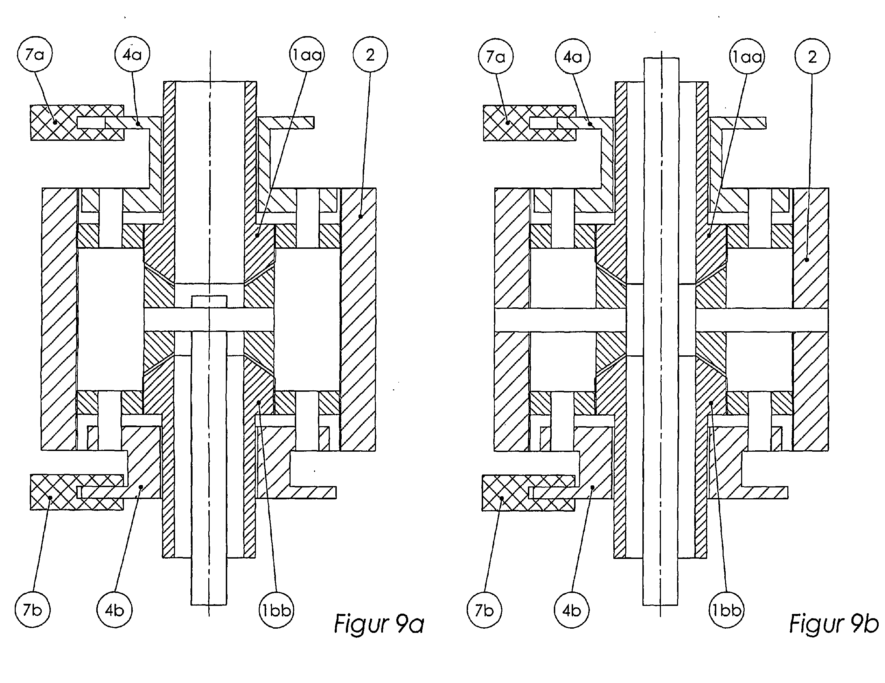

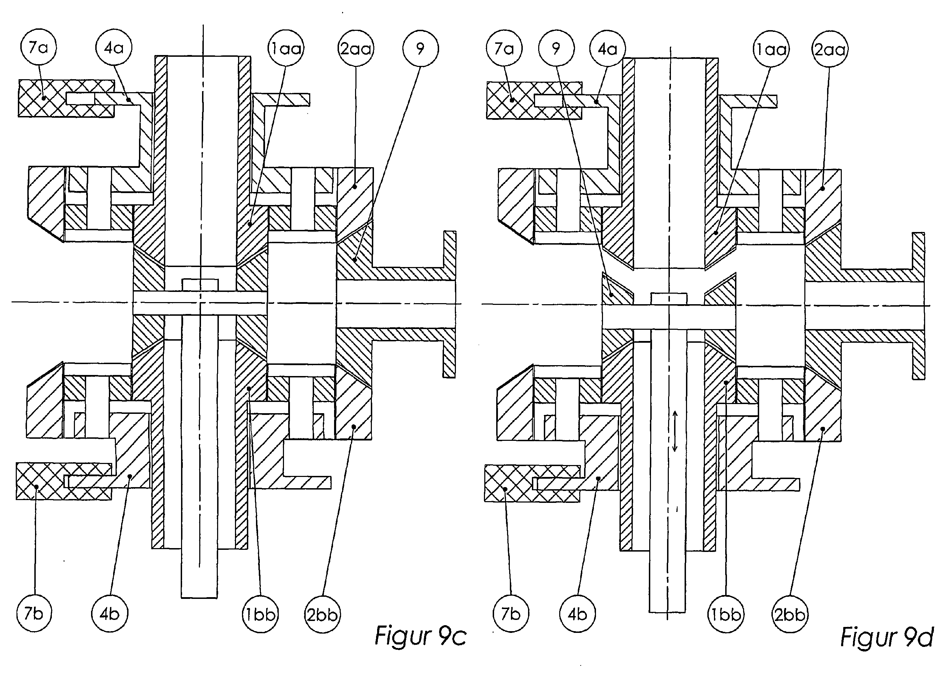

**Fig. 1** zeigt einen Schnitt durch das erfindungsgemäße Getriebe, bei dem der Antrieb (8) von der Seite (a) über das Sonnenrad (1) erfolgt und der Planetenträger (4a) mittels der Arretierung bzw. Bremse (7a) arretiert bzw. bis zum Stillstand gebremst wird. Die Hohlradverzahnung (2a) hat einen kleineren Wirkkreisdurchmesser als die Hohlradverzahnung (2b), wodurch die Laufrichtung des Abtriebs über die Welle des Planetenträgers (4b) die entgegengesetzte Laufrichtung aufweist wie das Sonnenrad (1).
   Mit dieser Anordnung können bei kleiner Wirkkreisdifferenz der Verzahnungen (2a) und (2b) sehr große Untersetzungen (annähernd 1/-0,0X)erreicht werden Die Drehrichtung des Abtriebs ist der Drehrichtung des Antriebs. entgegengesetzt.
   Es besteht auch die Möglichkeit, anstatt einer Arretierung bzw. Bremse (7a) hier einen Nebenantrieb (8a) über z.B. eine Schnecke, Kette, Zahnrad, Riemen etc. anzubringen, der die Drehzahl des Antriebs überlagert, wobei diese Überlagerungsdrehzahl annähernd 1/1 entsprechend der Verhältnisse der Zahnradpaarungen zur Abtriebsdrehzahl addiert bzw. subtrahiert wird.
**Fig. 1a** zeigt das Getriebe wie in Fig. 1 mit dem Unterschied, dass hier die Hohlradverzahnung (2b) einen kleineren Wirkkreisdurchmesser als die Hohlradverzahnung (2a) hat, wodurch die Laufrichtung des Abtriebs über die Welle des Planetenträgers (4b) die gleiche Laufrichtung aufweist wie das Sonnenrad. Alle anderen Möglichkeiten und Eigenschaften des in Fig. 1 dargestellten Getriebes bleiben analog erhalten.
**Fig. 1b** zeigt das Getriebe ähnlich Fig. 1 als perspektivische Darstellung ohne Gehäuse im zusammengebauten Zustand.
**Fig. 1c** zeigt das Getriebe wie in Fig. 2 als Explosionsdarstellung
**Fig. 2** zeigt das Getriebe wie in Fig. 1 beschrieben mit dem Unterschied, dass in diesem Fall der Antrieb (8) über den Planetenträger (4a) erfolgt und das Hohlrad (2) mit den Verzahnungen (2a) und (2b) mittels der Arretierung bzw. Bremse (7c) arretiert bzw. bis zum Stillstand gebremst wird. Mit dieser Anordnung können bei kleiner Wirkkreisdifferenz der Verzahnungen (2a) und (2b) Untersetzungen annähernd 1/0,9...X erreicht werden.
   Da bei dieser Anordnung das Sonnenrad ebenfalls dreht, kann diese Anordnung auch als Lastverteilungsgetriebe verwendet werden.
   Es besteht auch hier die Möglichkeit, anstatt oder gemeinsam mit einer Arretierung bzw. Bremse (7c) hier einen Nebenantrieb (8a) z.B. über eine Schnecke, Kette, Zahnrad, Riemen etc. anzubringen, der die Drehzahl des Antriebs überlagert, wobei diese Drehzahl annähernd 1/1 entsprechend der Verhältnisse der Zahnradpaarungen zur Abtriebsdrehzahl addiert bzw. subtrahiert wird.

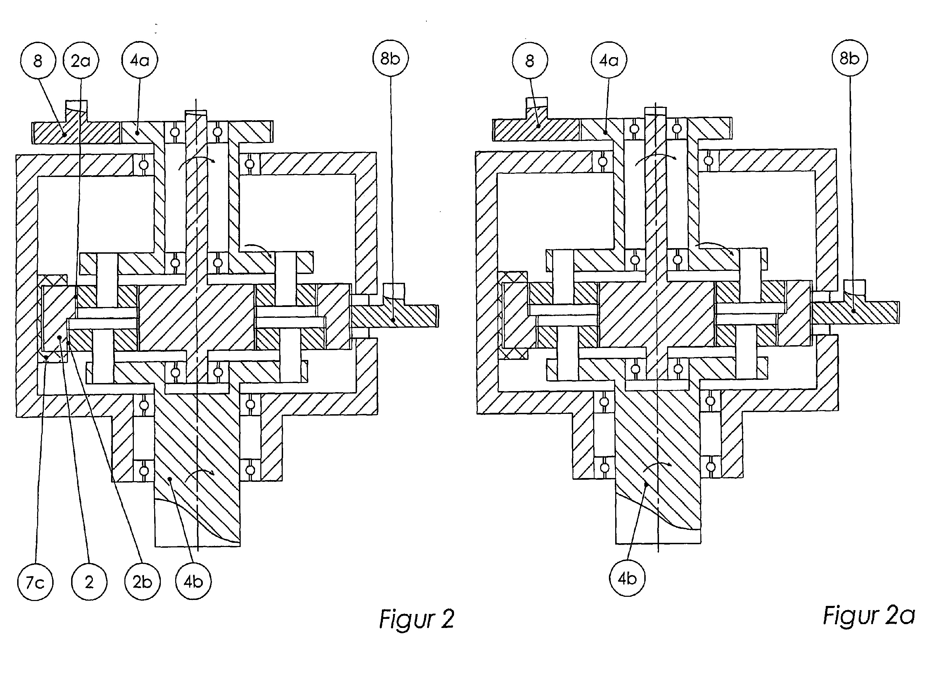

**Fig. 2a** zeigt das erfindungsgemäße Getriebe wie in Fig. 2 beschrieben (auch mit der Möglichkeit des Nebenantriebs (8a) mit dem Unterschied, dass in diesem Fall der Wirkkreisdurchmesser (2a) etwas größer als der Wirkkreisdurchmesser (2b) ist, wodurch Untersetzungen annähernd 1/1,0X erreicht werden

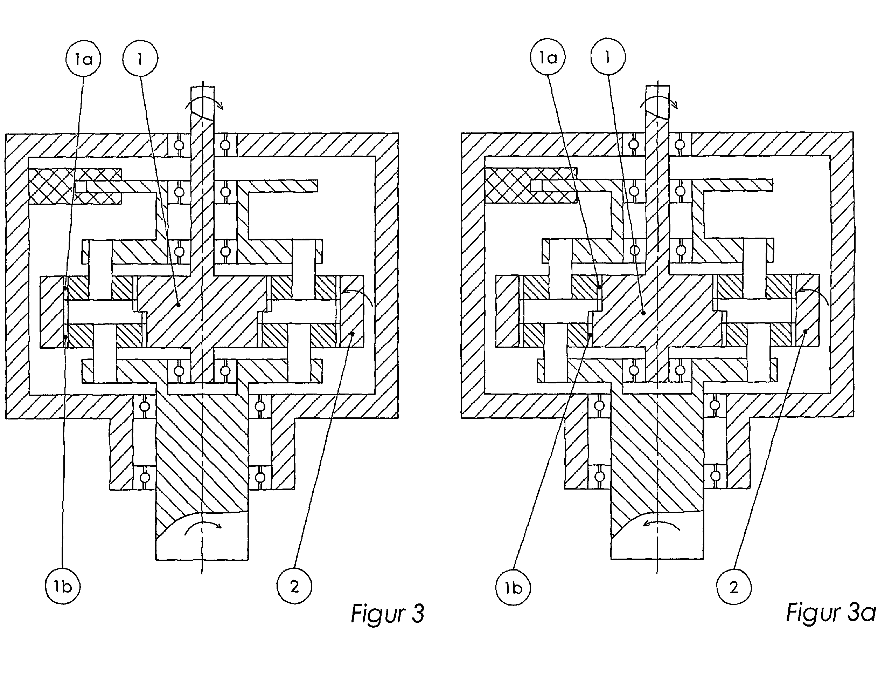

**Fig. 3** zeigt ein Getriebe ähnlich Fig. 1 mit dem Unterschied, dass hier die Änderung des Wirkkreisdurchmessers am Sonnenrad (1) erfolgt anstatt am Hohlrad (2) und der Wirkkreisdurchmesser der Verzahnung (1b) bei gleichen oder unterschiedlichen Moduln kleiner als der Wirkkreisdurchmesser (1 a) ist. Im Übrigen bleiben alle anderen Möglichkeiten und Eigenschaften der in Fig. 1 bis Fig. 2a dargestellten Getriebe analog erhalten.
**Fig. 3a** zeigt ein Getriebe ähnlich Fig. 1 a mit dem Unterschied, dass hier die Änderung des Wirkkreisdurchmessers am Sonnenrad (1) erfolgt anstatt am Hohlrad (2) und der Wirkkreisdurchmesser der Verzahnung (1a) bei gleichen oder unterschiedlichen Moduln kleiner als der Wirkkreisdurchmesser (1b) ist. Im Übrigen bleiben alle anderen Möglichkeiten und Eigenschaften der in Fig. 1 bis Fig. 1 a dargestellten Getriebe analog erhalten.

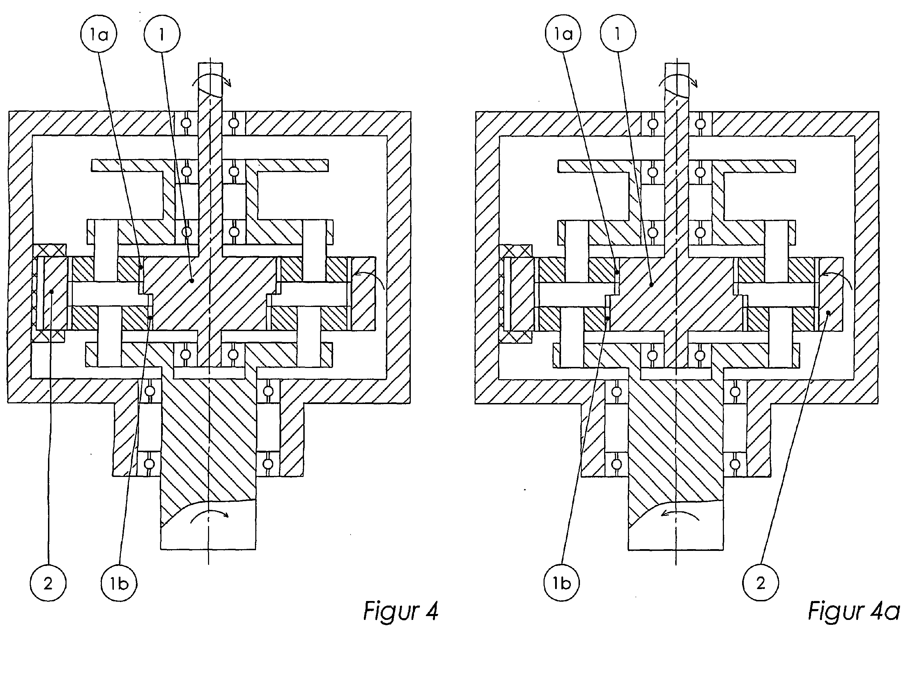

**Fig. 4** Zeigt ein Getriebe ähnlich Fig. 2 mit dem Unterschied, dass hier die Änderung des Wirkkreisdurchmessers am Sonnenrad (1) erfolgt anstatt am Hohlrad (2) und der Wirkkreisdurchmesser der Verzahnung (1b) bei gleichen oder unterschiedlichen Moduln kleiner als der Wirkkreisdurchmesser (1a) ist. Im Übrigen bleiben alle anderen Möglichkeiten und Eigenschaften (Haupt (8) und Nebenantrieb(8a)) der in Fig. 2 und in Fig. 2a dargestellten Getriebe analog erhalten.
**Fig. 4a** zeigt ein Getriebe ähnlich Fig. 2a mit dem Unterschied, dass hier die Änderung des Wirkkreisdurchmessers am Sonnenrad (1) erfolgt anstatt am Hohlrad (2) und der Wirkkreisdurchmesser der Verzahnung (1 a) bei gleichen oder unterschiedlichen Moduln kleiner als der Wirkkreisdurchmesser (1b) ist.
   Im Übrigen bleiben alle anderen Möglichkeiten und Eigenschaften (Haupt (8) und Nebenantrieb(8a)) der in Fig. 2 und in Fig. 2a dargestellten Getriebe analog erhalten.
**Fig. 5** zeigt eine Variante des Getriebes ähnlich den in den vorangegangenen Figuren dargestellten Getrieben Fig. 1 bis Fig. 4a mit dem Unterschied, dass hier der Antrieb über den Außendurchmesser des Hohlrades (2) erfolgt und der Planetenträger (4a) arretiert, gebremst oder mit einem Nebenantrieb (8a) versehen ist. Im Übrigen bleiben alle anderen Möglichkeiten und Eigenschaften der in den vorangegangenen Fig. 1 bis Fig. 4a dargestellten Getriebe analog erhalten.
**Fig. 6** zeigt eine weitere Variante der Getriebe ähnlich den in den vorangegangenen Figuren dargestellten Getrieben Fig. 1 bis Fig. 5 mit dem Unterschied, dass hier das die mechanische Verbindung der beiden Teile (2a) und (2b) des Hohlrades (2) durch ein Kopplungszahnrad (9) erfolgt.
   Weiter ist in dieser Figur auch die Möglichkeit dargestellt, entweder durch eine Bremse oder Arretierung (7a) den Planetenträger (4a) oder durch eine Bremse oder Arretierung (7b) den Planetenträger (4b) oder durch eine Bremse oder Arretierung (7c) den Nebenantrieb (8a) durch das Kopplungszahnrad (9) abwechselnd einzeln abzubremsen und somit eine Kupplung oder Umschaltung des Abtriebs zu erhalten.
**Fig. 6** zeigt lediglich Möglichkeiten auf, es kann auch beliebig viele (1-4) dieser Bremsen, Arretierungen oder Nebenantriebe zur Ausführung kommen. Weiter ist in dieser Figur stellvertretend für alle andern Figuren auch die Möglichkeit dargestellt, die Wellen hohl auszubilden und damit einen Kanal (10) zur Durchführung weiterer Elemente (11) zu schaffen.

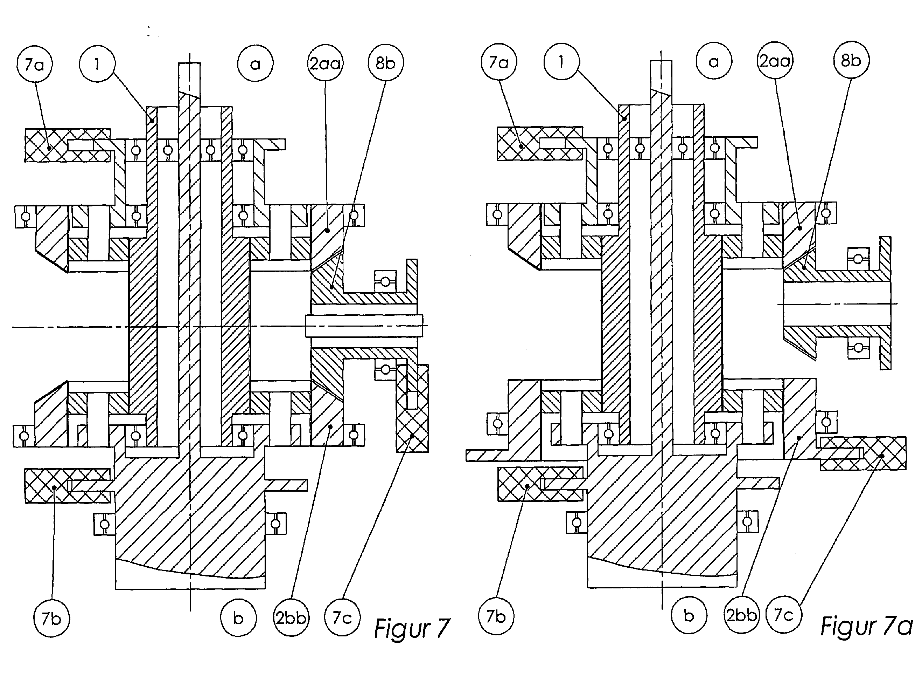

**Fig. 7** zeigt eine weitere Variante der Getriebe ähnlich den in den vorangegangenen Figuren dargestellten Getrieben Fig. 1 bis Fig. 6 mit dem Unterschied, dass hier der An- und Abtrieb von einer Seite aus erfolgen können bzw. die Welle des Planetenträgers (4b) durch das Sonnenrad (1) hindurch zur Seite (a) zurückgeführt wird. Die Positionen der Bremsen, Arretierungen oder Nebenantriebe zeigen lediglich die Möglichkeiten auf, es können beliebig viele (1 - 4) dieser Bremsen, Arretierungen oder Nebenantriebe zur Ausführung kommen.
**Fig. 7a** zeigt eine weitere Variante der Getriebe ähnlich den in den vorangegangenen Figuren dargestellten Getrieben Fig. 1 bis Fig. 7 mit dem Unterschied, dass hier das Hohlrad (2aa) durch den Nebenantrieb (8b) angetrieben wird, während das Hohlrad (2bb) von der Bremse (7c) festgehalten (arretiert, gebremst oder mit einem weiteren Nebenantrieb (8b) wird.
   Die Positionen der Bremsen, Arretierungen oder Nebenantriebe zeigen lediglich die Möglichkeiten auf, es können beliebig viele (1 - 4) dieser Bremsen, Arretierungen oder Nebenantriebe zur Ausführung kommen.

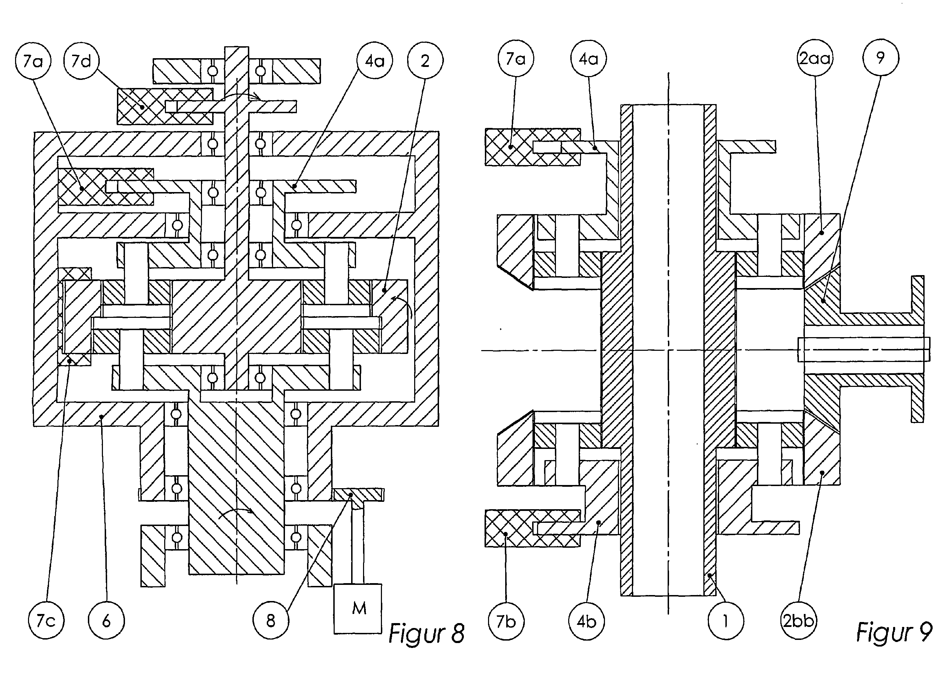

**Fig. 8** zeigt eine weitere Variante des Getriebes ähnlich den in den vorangegangenen Figuren dargestellten Getrieben Fig. 1 bis Fig. 7 mit dem Unterschied, dass hier er Abtrieb (8) z.B. über das Gehäuse (6) und weiter über das Hohlrad erfolgt und das Sonnenrad (1) gebremst (7d) oder arretiert wird bzw. als Nebenantrieb dient.
   Alternativ kann durch wechselndes Abbremsen oder Arretieren des Planetenträgers (4a) mittels Bremse oder Arretierung (7a), des Sonnenrades (1) mittels Bremse oder Arretierung (7d) oder des Hohlrades (2) mittels Bremse oder Arretierung (7c) eine Drehzahlumschaltung, Drehrichtungswechsel oder Kupplung erfolgen
**Fig. 9** zeigt eine weitere Variante des Getriebes ähnlich den in den vorangegangenen Figuren dargestellten Getrieben Fig. 1 bis Fig. 8 mit dem Unterschied, dass hier bei Antrieb (8) über das Kopplungskegelrad (9) durch abwechselndes Abbremsen des Planetenträgers (4a) mittels Bremse oder Arretierung (7a) und des Planetenträgers (4b) mittels Bremse oder Arretierung (7b) die Drehrichtung des Sonnenrades umgekehrt werden kann oder umgekehrt. Der Antrieb wie auch der Abtrieb kann über jedes der Elemente (1) (2) (4a) oder (4b) erfolgen
**Fig. 9a** zeigt eine weitere Variante des Getriebes ähnlich den in den vorangegangenen Figuren dargestellten Getrieben Fig. 1 bis Fig. 8 mit dem Unterschied, dass hier die Mechanische Kopplung des Sonnenrades mittels eines (oder mehrerer) Kegelrades (9) erfolgt. Die mechanische Anbindung erfolgt hier z.B. durch eine feststehende oder rotierende Welle innerhalb der Hohlwelle.
**Fig. 9b** zeigt eine weitere Variante des Getriebes Fig. 9a mit dem Unterschied, dass hier die mechanische Anbindung des (der) Kopplungskegelrades an das Hohlrad (2) erfolgt
**Fig. 9c** zeigt eine weitere Variante des Getriebes ähnlich den in den vorangegangenen Figuren dargestellten Getrieben in Fig. 9 bis Fig. 9b mit dem Unterschied, dass hier sowohl das Sonnenrad wie auch das Hohlrad jeweils mittels eines (oder mehrerer) Kopplungskegelrades (9) mechanisch gekoppelt sind. Die mechanische Anbindung des (der) Kopplungskegelrades des Sonnenrades kann wie dargestellt durch eine feststehende oder rotierende Welle innerhalb der Hohlwelle, kann aber auch frei von außen oder durch die Hohlwelle des Kopplungskegelrades des Hohlrades (2) hindurch erfolgen.
**Fig. 9d** zeigt eine weitere Variante des Getriebes ähnlich den in den vorangegangenen Figuren dargestellten Getrieben Fig. 9 bis Fig. 9c mit dem Unterschied, dass hier das Kopplungskegelrad (9) mechanisch an einer längs verschiebbaren drehfesten oder rotierenden Welle innerhalb der Hohlwelle befestigt ist und beliebig in die Verzahnung des Sonnenradteiles (1aa) oder (1bb) eingreifen kann.

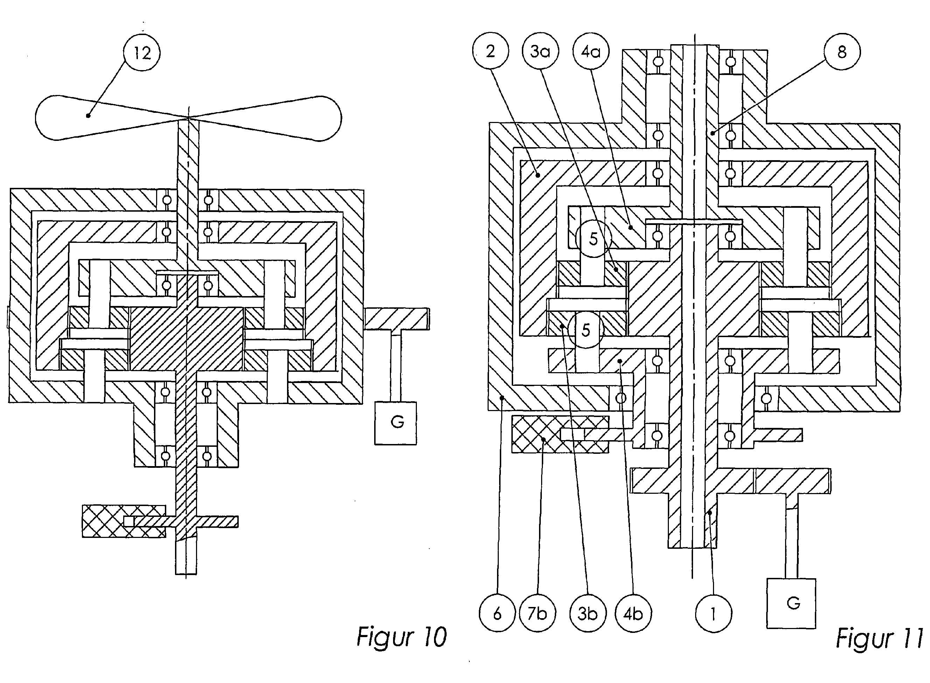

**Fig. 10** zeigt eine weitere Variante des Getriebes ähnlich den in den vorangegangenen Figuren dargestellten Getrieben Fig. 1 bis Fig. 9 mit dem Unterschied, dass hier der Planetenträger (4b) gleichzeitig als Getriebegehäuse dient. Beispielhaft ist hier auch der Antrieb mittels Windkraft und der Abtrieb auf einen Generator skizziert.
**Fig. 11** zeigt eine weitere Variante des Getriebes ähnlich den in den vorangegangenen Figuren dargestellten Getrieben Fig. 1 bis Fig. 9. Hier erfolgt die Leistungsabnahme beispielsweise von der Welle des Sonnenrades (1)

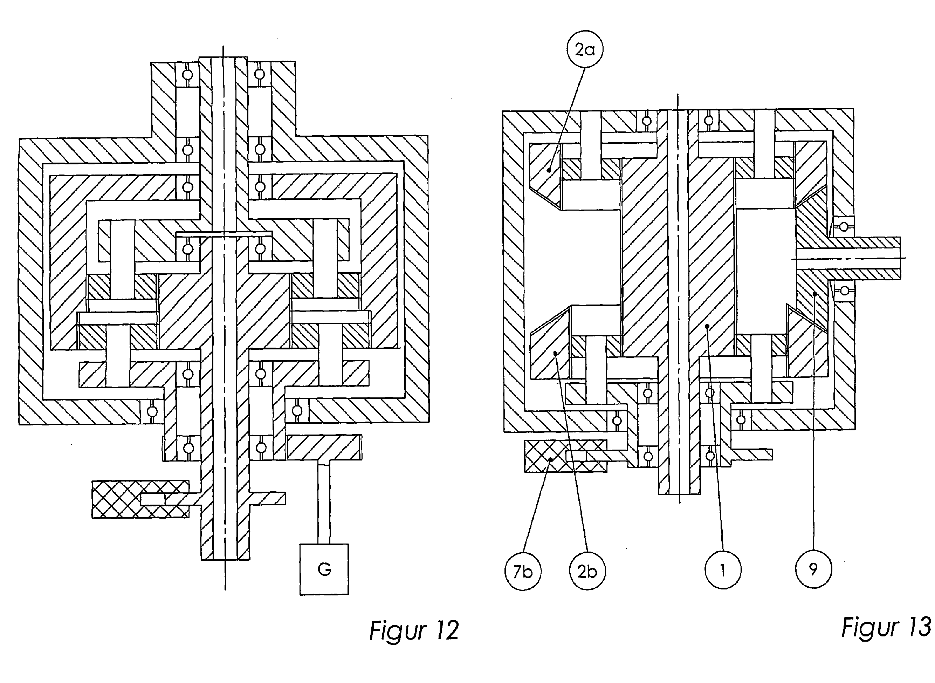

**Fig. 12** zeigt eine weitere mögliche Variante des Getriebes ähnlich den in den vorangegangenen Figuren dargestellten Getrieben Fig. 1 bis Fig. 9. Hier erfolgt die Leistungsabnahme beispielsweise von der Welle des Planetenträgers (4b)
**Fig. 13** zeigt eine weitere mögliche Variante des Getriebes ähnlich den in den vorangegangenen Figuren dargestellten Getrieben Fig. 1 bis Fig. 9. Hier erfolgt die unter- bzw. Übersetzung zwischen dem Sonnenrad (1) und der Kopplungskegelrad (9)

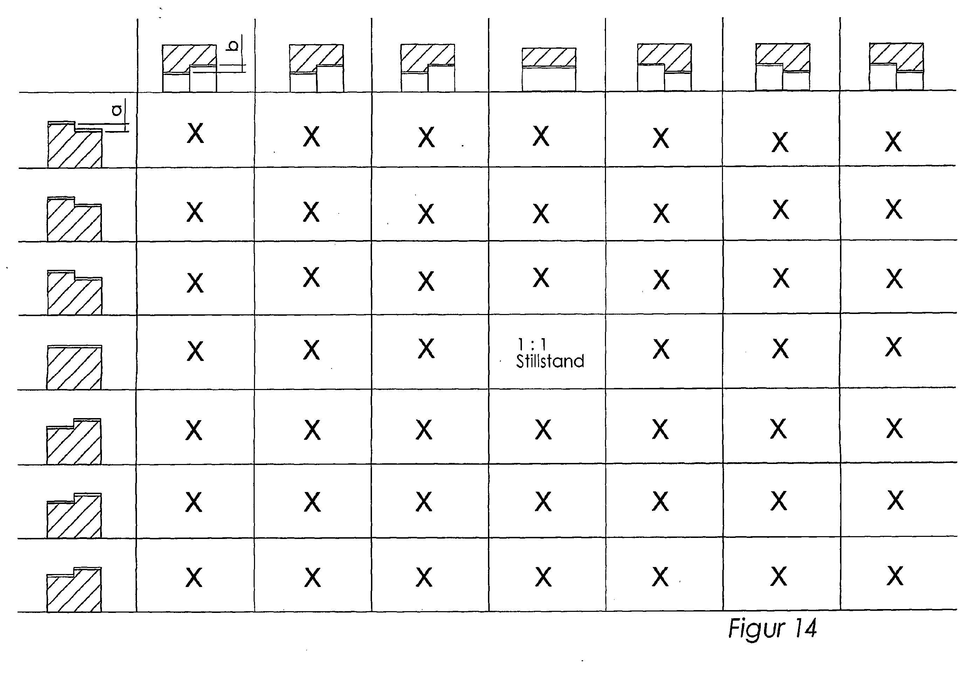

**Fig. 14** zeigt in Form einer Zuordnungstabelle die Möglichkeiten, eine Änderung der Gesamtüber- oder Untersetzung durch die Änderung der Wirkkreisdurchmesser sowohl am Sonnenrad (1) wie auch am Hohlrad (2) vorzunehmen. Dabei kann der Wirkkreisdurchmessersprung (a) des Sonnenrades größer, gleich oder kleiner als der Wirkkreisdurchmessersprung (b) des Hohlrades sein. Auch sind alle Kombinationen möglich.
   Die dargestellten erfindungsgemäßen Getriebe können je nachdem, auf welcher Seite sich der Antrieb oder der Abtrieb befindet ebenso als Unter- wie als Übersetzungsgetriebe eingesetzt werden. Diese Zuordnungsmatrix schließt auch die Varianten mit Kopplungskegelrädern mit ein.

## Patentansprüche

1. Unter- bzw. Übersetzungsgetriebe aus einem Planetengetriebe umfassend ein Sonnenrad (1) mit einer ersten und einer zweiten mechanisch gekoppelten Verzahnung (1a, 1b), einen ersten und einen zweiten Planetenträger (4a, 4b) mit einem entsprechenden ersten und zweiten Planetenradsatz (3a, 3b), wobei der erste Planetenradsatz (3a) und der zweite Planetenradsatz (3b) eine Verzahnung aufweisen, **dadurch gekennzeichnet, dass** das Planetengetriebe ein Hohlrad (2) mit einer ersten und einer zweiten mechanisch gekoppelten Verzahnung (2a, 2b) umfasst, wobei die erste und die zweite mechanisch gekoppelte Verzahnung (1a, 1b) des Sonnerades (1) entsprechend mit der Verzahnung des ersten und des zweiten Planetenradsatzes (3a, 3b) in Eingriff stehen und die Verzahnungen des ersten und des zweiten Planetenradsatzes entsprechend mit den ersten und zweiten Verzahnungen des Hohlrades (2a, 2b) in Eingriff stehen, wobei die ersten und die zweiten Verzahnungen des Hohlrades (2a, 2b) und/oder des Sonnenrades (1) unterschiedlich Wirkreisdurchmesser aufweisen.

2. Unter- bzw. Übersetzungsgetriebe nach Anspruch 1 **dadurch gekennzeichnet, dass** die mechanische Kopplung der Verzahnungen (1a) und (1b) des Sonnenrades (1) und (2a) und (2b) des Hohlrades (2) so ausgeführt sind, dass sie jeweils aus einem Teil hergestellt sind.

3. Unter- bzw. Übersetzungsgetriebe nach Anspruch 1 **dadurch gekennzeichnet, dass** die mechanische Kopplung der Verzahnungen (1a) und (1b) des Sonnenrades (1) und (2a) und (2b) des Hohlrades (2) so ausgeführt ist, dass sie mittels mechanischer Verbindungselemente miteinander verbunden sind.

4. Unter- bzw. Übersetzungsgetriebe nach Anspruch 1 **dadurch gekennzeichnet, dass** die mechanische Kopplung der Verzahnungen (2a) und (2b) des Hohlrades (2) so ausgeführt ist, dass die mechanische Verbindung zwischen der Seite (a) des Hohlrades (2) mit der Seite (b) des Hohlrades (2) über weitere Zahnräder (9) hergestellt ist.

5. Unter- bzw. Übersetzungsgetriebe nach Anspruch 1 **dadurch gekennzeichnet, dass** die mechanische Kopplung der Verzahnungen (1 a) und (1 b) des Sonnenrades (1) und (2a) und (2b) des Hohlrades (2) so ausgeführt ist, dass die mechanische Verbindung zwischen der Seite (a) und der Seite (b) des Sonnenrades (1) und des Hohlrades (2) über weitere Zahnräder (9) hergestellt ist.

6. Unter- bzw. Übersetzungsgetriebe nach Anspruch 5 **dadurch gekennzeichnet, dass** die Kegelzahnräder (9) des Hohlrades (2) als Nebenantrieb oder Bremse dienen.

7. Unter- bzw. Übersetzungsgetriebe nach Anspruch 6 **dadurch gekennzeichnet, dass** die Kegelzahnräder (9) des Hohlrades (2) die als Nebenantrieb oder Bremse dienen, mit geregelter Halte- oder Antriebskraft als Kupplung arbeiten kann.

8. Unter- bzw. Übersetzungsgetriebe nach einem oder mehreren der vorhergehenden Ansprüche **dadurch gekennzeichnet, dass** der Wirkkreis der Hohlradverzahnung (2b) bei gleichem oder unterschiedlichem Modul größer oder kleiner als der Wirkkreis der Hohlradverzahnung (2a) ist.

9. Unter- bzw. Übersetzungsgetriebe nach einem oder mehreren der vorhergehenden Ansprüche **dadurch gekennzeichnet, dass** der Wirkkreis der Sonnenradverzahnung (1b) bei gleichem oder unterschiedlichem Modul größer oder kleiner als der Wirkkreis der Sonnenradverzahnung (1 a) ist.

10. Unter- bzw. Übersetzungsgetriebe nach einem oder mehreren der vorhergehenden Ansprüche **dadurch gekennzeichnet, dass** die Wellen des Sonnenrades (1), des Hohlrades (2) bzw. diese selbst und eines oder beider Planetenträger (4a) und (4b) soweit hohl ausgeführt sind, dass dadurch die Durchführung einer Welle oder Leitung durch das Getriebe hindurch möglich ist.

11. Unter- bzw. Übersetzungsgetriebe nach einem oder mehreren der vorhergehenden Ansprüche **dadurch gekennzeichnet, dass** die Welle des Kopplungszahnrades (9) bzw. dieses selbst hohl ausgeführt ist, sodass dadurch die Durchführung einer Welle oder Leitungen möglich ist.

12. Unter- bzw. Übersetzungsgetriebe nach einem oder mehreren der vorhergehenden Ansprüche **dadurch gekennzeichnet, dass** eines der Elemente Sonnenrad (1), Hohlrad (2) oder Hohlrad (2a), Hohlrad (2b) Planetenträger (4a) oder Planetenträger (4b) durch eine Arretierung oder Bremse (7), ((7a), (7b), (7c) (7d)), fixiert ist und dass ein anderes der Elemente Sonnenrad (1), Hohlrad (2), Planetenträger (4a) oder Planetenträger (4b) sich frei bewegen kann.

13. Unter- bzw. Übersetzungsgetriebe nach einem oder mehreren der vorhergehenden Ansprüche **dadurch gekennzeichnet, dass** eines oder mehrere der Elemente Sonnenrad (1), Hohlrad (2), oder Hohlrad (2a), Hohlrad (2b) Planetenträger (4a) oder Planetenträger (4b) abwechselnd nicht gleichzeitig durch eine Bremse (7), ((7a), (7b), (7c)) fixiert werden können und dass ein anderes der Elemente Sonnenrad (1), Hohlrad (2), oder Hohlrad (2a), Hohlrad (2b) Planetenträger (4a) oder Planetenträger (4b) sich ebenfalls abwechselnd und nicht gleichzeitig frei bewegen kann.

14. Unter- bzw. Übersetzungsgetriebe nach einem oder mehreren der vorhergehenden Ansprüche **dadurch gekennzeichnet, dass** anstatt der Fixierung durch eine Arretierung oder Bremse eines der Elemente Sonnenrad (1), Hohlrad (2), oder Hohlrad (2a), Hohlrad (2b) Planetenträger (4a) oder Planetenträger (4b) eine Überlagerung der Unter- bzw. Übersetzung durch einen Nebenantrieb erfolgt.

15. Unter- bzw. Übersetzungsgetriebe nach einem oder mehreren der vorhergehenden Ansprüche **dadurch gekennzeichnet, dass** der An- und Abtrieb von der gleichen Seite erfolgen und dabei die An- oder Abtriebswelle durch die Ab- bzw Antriebswelle geführt wird.

16. Unter- bzw. Übersetzungsgetriebe nach einem oder mehreren der vorhergehenden Ansprüche **dadurch gekennzeichnet, dass** die Arretierungen feste oder variabel einstellbare Haltekräfte besitzen und dadurch das Getriebe als Kupplung und/oder Drehmomentbegrenzung eingesetzt werden kann.

## Claims

1. Reduction or transmission gear of a planet gear comprising a sun gear (1) with a first and a second mechanically coupled tooth system (1a, 1b), a first and a second planet carrier (4a, 4b) with a corresponding first and second planetary gear set (3a, 3b), wherein the first planetary gear set (3 a) and the second planetary gear set (3b) have a tooth system,
**characterised in that** the planet gear includes a ring gear (2) with a first and a second mechanically coupled tooth system (2a, 2b), wherein the first and second mechanically coupled tooth system (1a, 1b) of the sun gear (1) mesh accordingly with the tooth system of the first and second planetary gear set (3 a, 3b) and the tooth system of the first and second planetary gear set meshes accordingly with the first and second tooth systems of the ring gear (2a, 2b), wherein the first and second tooth systems of the ring gear (2a, 2b) and/or of the sun gear (1) have different effective circle diameters.

2. Reduction or transmission gear according to claim 1, **characterised in that** the mechanical coupling of the tooth systems (1a) and (1b) of the sun gear (1) and (2a) and (2b) of the ring gear (2) is so designed that in each case they are made of one part.

3. Reduction or transmission gear according to claim 1, **characterised in that** the mechanical coupling of the tooth systems (1a) and (1b) of the sun gear (1) and (2a) and (2b) of the ring gear (2) is so designed that they are joined to one another by means of mechanical connecting elements.

4. Reduction or transmission gear according to claim 1, **characterised in that** the mechanical coupling of the tooth systems (2a) and (2b) of the ring gear (2) is so designed that the mechanical link between side (a) of the ring gear (2) and side (b) of the ring gear (2) is created through further toothed gears (9).

5. Reduction or transmission gear according to claim 1, **characterised in that** the mechanical coupling of the tooth systems (1a) and (1b) of the sun gear (1) and (2a) and (2b) of the ring gear (2) is so designed that the mechanical link between side (a) and side (b) of the sun gear (1) and the ring gear (2) is created through further toothed gears (9).

6. Reduction or transmission gear according to claim 5, **characterised in that** the bevel gears (9) of the ring gear (2) serve as secondary drive or brake.

7. Reduction or transmission gear according to claim 6, **characterised in that** the bevel gears (9) of the ring gear (2) which serve as secondary drive or brake are able to act as clutch with controlled holding or drive force.

8. Reduction or transmission gear according to one or more of the preceding claims, **characterised in that** the effective circle of the ring gear tooth system (2b), with the same or a different module, is greater or smaller than the effective circle of the ring gear tooth system (2a).

9. Reduction or transmission gear according to one or more of the preceding claims, **characterised in that** the effective circle of the sun gear tooth system (1b), with the same or a different module, is greater or smaller than the effective circle of the sun gear tooth system (1a).

10. Reduction or transmission gear according to one or more of the preceding claims, **characterised in that** the shafts of the sun gear (1), the ring gear (2) or the gear itself and one or both planet carriers (4a) and (4b) are made hollow to the extent that, by this means, it is possible for a shaft or line to be guided through the gear.

11. Reduction or transmission gear according to one or more of the preceding claims, **characterised in that** the shaft of the bevel gear (9) or the gear itself is made hollow so that, by this means, it is possible for a shaft or line to be guided through.

12. Reduction or transmission gear according to one or more of the preceding claims, **characterised in that** one of the elements sun gear (1), ring gear (2) or ring gear (2a), ring gear (2b), planet carrier (4a) or planet carrier (4b) is fixed by a locking device or brake (7), and that another of the elements sun gear (1), ring gear (2), planet carrier (4a) or planet carrier (4b) is able to move freely.

13. Reduction or transmission gear according to one or more of the preceding claims, **characterised in that** one of the elements sun gear (1), ring gear (2) or ring gear (2a), ring gear (2b), planet carrier (4a) or planet carrier (4b) alternately may not be fixed simultaneously by a brake (7), (7a), (7b), (7c), and that another of the elements sun gear (1), ring gear (2) or ring gear (2a), ring gear (2b), planet carrier (4a) or planet carrier (4b) is able to move freely likewise alternately and not simultaneously.

14. Reduction or transmission gear according to one or more of the preceding claims **characterised in that**, instead of the fixing by a locking device or brake, one of the elements sun gear (1), ring gear (2) or ring gear (2a), ring gear (2b), planet carrier (4a) or planet carrier (4b) effects an overlapping of the reduction or transmission gear by means of a secondary drive.

15. Reduction or transmission gear according to one or more of the preceding claims, **characterised in that** the drive and output is effected from the same side, with the drive or output shaft being guided by the output or drive shaft.

16. Reduction or transmission gear according to one or more of the preceding claims **characterised in that** the locking devices have fixed or variably adjustable holding forces and by this means the gear may be used as a clutch and/or torque control.

## Revendications

1. Engrenage de multiplication ou de démultiplication d'un engrenage planétaire comprenant une roue solaire (1) avec une première et une deuxième denture mécaniquement couplée (1a, 1b), un premier et un deuxième support planétaire (4a, 4b) avec un premier et deuxième train planétaire correspondant (3a, 3b), le premier train planétaire (3a) et le deuxième train planétaire (3b) présentant une denture, **caractérisée en ce que** l'engrenage planétaire comprend une couronne (2) avec une première et une deuxième denture (2a, 2b) couplée mécaniquement, la première et la deuxième denture (1a, 1b) de la roue solaire (1) étant correspondamment en prise avec la denture du premier et du deuxième train planétaire (3a, 3b) et les dentures du premier et du deuxième train planétaire étant correspondamment en prise avec les premières et deuxièmes dentures de la couronne (2a, 2b), les premières et les deuxièmes dentures de la couronne (2a, 2b) et/ou de la roue solaire (1) présentant des diamètres circulaires effectifs différents.

2. Engrenage de multiplication ou de démultiplication selon la revendication 1, **caractérisé en ce que** le couplage mécanique des dentures (1a) et (1b) de la roue solaire (1) et (2a) et (2b) de la couronne (2) sont effectuées de telle manière, á ce qu'elles sont fabriquées d'une pièce entière respectivement.

3. Engrenage de multiplication ou de démultiplication selon la revendication 1, **caractérisé en ce que** le couplage mécanique des dentures (1a) et (1b) de la roue solaire (1) et (2a) et (2b) de la couronne (2) est effectué de telle manière, à ce qu'elles sont liées ensemble au moyens d'éléments de liaison mécanique.

4. Engrenage de multiplication ou de démultiplication selon la revendication 1, **caractérisé en ce que** le couplage mécanique des dentures (2a) et (2b) de la couronne (2) est effectué de telle manière, à ce que la liaison mécanique entre le côté (a) de la couronne (2) avec le côté (b) de la couronne (2) est formée par des roues dentées (9) supplémentaires.

5. Engrenage de multiplication ou de démultiplication selon la revendication 1, **caractérisé en ce que** le couplage mécanique des dentures (1a) et (1b) de la roue solaire (1) et (2a) et (2b) de la couronne (2) est effectué de telle manière, que le couplage mécanique entre le coté (a) et le coté (b) de la roue solaire (1) et de la couronne (2) est formé par des roues dentées (9) supplémentaires.

6. Engrenage de multiplication ou de démultiplication selon la revendication 5, **caractérisé en ce que** les roues dentées coniques (9) de la couronne (2) servent en tant que prise de force ou frein.

7. Engrenage de multiplication ou de démultiplication selon la revendication 6, **caractérisé en ce que** les roues dentées coniques (9) de la couronne (2) qui servent en tant que prise de force ou de frein, peut travailler en tant qu'engrenage avec une force réglée de retenue ou de propulsion.

8. Engrenage de multiplication ou de démultiplication selon l'une ou plusieurs des revendications précédentes, **caractérisé en ce que** le cercle effectif de la denture de la couronne (2b), quand le module est égal ou diffèrent, est supérieur ou inférieur au cercle effectif de la denture de la couronne (2a).

9. Engrenage de multiplication ou de démultiplication selon une ou plusieurs des revendications précédentes, **caractérisé en ce que** le cercle effectif de la denture de la roue solaire (1b) quand le module est égal ou diffèrent, est supérieur ou inférieur au cercle effectif de la denture de la roue solaire (1a).

10. Engrenage de multiplication ou de démultiplication selon l'une ou plusieurs des revendications précédentes, **caractérisé en ce que** les arbres de la roue solaire (1), de la couronne (2), ou eux-mêmes et d'un ou des deux supports planétaires (4a) et (4b) sont exécuté creux, à un degré tel que de ce fait l'introduction d'un arbre ou d'une ligne à travers l'engrenage est possible.

11. Engrenage de multiplication ou de démultiplication selon l'une ou plusieurs des revendications précédentes, **caractérisée en ce que** l'arbre de la roue dentée de couplage (9) ou elle-même est executé creux, à un degré tel que de ce fait l'introduction d'un arbre ou de lignes à travers est possible.

12. Engrenage de multiplication ou de démultiplication selon l'une ou plusieurs des revendications précédentes, **caractérisé en ce qu'**un des éléments roue solaire (1), couronne (2), ou couronne (2a), couronne (2b) support planétaire (4a) ou support planétaire (4b) est fixé par un dispositif de blocage ou un frein ((7), (7a), (7b), (7c), (7d)), est qu'un des autres éléments roue solaire (1), couronne (2), support planétaire (4a) ou support planétaire (4b) peut se déplacer librement.

13. Engrenage de multiplication ou de démultiplications selon l'une ou plusieurs des revendications précédentes, **caractérisé en ce qu'**un ou plusieurs des éléments roue solaire (1), couronne (2), ou couronne (2a), couronne (2b) support planétaire (4a) ou support planétaire (4b) peuvent être fixé de façon alternante non simultane par un frein (7), ((7a), (7b), (7c)) et qu'un autre des éléments roue solaire (1), couronne (2) ou couronne (2a), couronne (2b) support planétaire (4a) ou support planétaire (4b) peut aussi se déplacer de façon alternante et non simultane.

14. Engrenage de multiplication ou de démultiplications selon l'une ou plusieurs des revendications précédentes, **caractérisé en ce que**, au lieu de fixation par un dispositif d'arrêt ou d'un frein d'un des éléments roue solaire (1), couronne (2), ou couronne (2a), couronne (2b) support planétaire (4a) ou support planétaire (4b), une super-position de l'engrenage de démultiplication ou de multiplication est exécutée par une prise de force adjacente.

15. Engrenage de multiplication ou de démultiplication selon l'une ou plusieurs des revendications précédentes, **caractérisé en ce que** la propulsion et l'entrainement sont exécuté du même côté et que l'arbre de propulsion et d'entrainement est guidé à travers l'arbre d'entrainement ou de propulsion.

16. Engrenage de multiplication ou de démultiplication selon l'une ou plusieurs des revendications précédentes, **caractérisé en ce que** les dispositifs d'arrêt possèdent des forces de fixation fixes ou réglables de manière variable, et de ce fait, l'entraînement peut être utilisé en tant qu'embrayage et ou de limitation de couple.
